# EUROPEAN PATENT APPLICATION

(11) **EP 4 773 450 A1**
(43) Date of publication of application: **08.07.2026**
(21) Application number: 25227592.0
(22) Date of filing: 30.12.2025
(51) Int. Cl.: H02G 1/08, G02B 6/50

(54) **A SYSTEM AND METHOD FOR LAYING CABLES AND THE LIKE THROUGH A PIPE**

(30) Priority: 03.01.2025 US 202519009696
(71) Applicant: LWF UK LIMITED, Widnes, Cheshire WA8 8NZ (GB)
(72) Inventor: Parker, Michael, Widnes, WA8 8NZ (GB)
(74) Representative: Wilson Gunn

(57) **Abstract**

A method of laying one or more elongate flexible members through a pipe comprising the steps of attaching a first end of the or each elongate flexible member to a second end of a draw wire, pushing a first length of the or each elongate flexible member into the pipe in a direction from an entry end towards an exit end at a first rate, pulling a second length of the draw wire through the pipe from the entry end towards the exit end at a second rate and coordinating the first length and first rate with the second length and second rate to drive the or each elongate flexible member through the pipe.

## Description

### Technical Field of the Invention

The present invention relates to a system and method for laying cables and the like through pipes, particularly fluid pipes such as water or wastewater pipes, for example.

### Background to the Invention

It is known in the art to utilise pre-existing pipes, such as those commonly used for water, wastewater, sewage or gas, for example, as conduits through which new cables are introduced. In this way it is possible to provide new cable systems, or upgrade existing cable systems, without the need for the installation of overhead cables or further excavation to lay the new cables in dedicated conduits. Systems of this type therefore tend to be much less expensive and are less disruptive in cases where a cable system may pass across a public highway, or private land, which would otherwise have to be excavated to lay additional conduits.

Whilst these systems provide the above-mentioned advantages, there are associated drawbacks. Given that the cables are introduced into live pipes, usually fluid pipes, it is necessary to isolate the section of pipe through which the cable is inserted during the installation process. By isolating pipes of this type, fluid is inevitably prevented from traveling downstream which leads to inconvenient interruptions in the supply of the fluid to the end user. In some instances, these interruptions may be present for a prolonged period of time which may not be acceptable.

An additional problem comes with inserting/installing a heavier or stiffer cable. Inserting such a cable through a straight run of pipe is subject to a friction force due to the weight of the cable on the inside of the pipe as it is drawn through the pipe. This friction force is greatly increased when the cable is to be inserted through a pipe which is not straight as each corner or bend in the pipe, increases the friction force in an exponential rather than a linear manner.

In these situations, the cable can also become 'hung up' or caught on a corner or bend in the pipe, abutting a fitting or angle change in the pipe, which retards or prevents any forward progress in the direction of insertion. Simply applying additional force on the cable from the second end risks damaging the cable or damaging or breaking the draw line which has been inserted through the pipe run and which is attached to an end of the cable to pull the cable through the pipe run.

It would therefore be advantageous to provide a system and method for laying one or more elongate flexible members through pipes in which the one or more elongate flexible members are to be subsequently located, which takes place whilst the pipe is live and pressurised and/or which addresses the difficulties in greatly increased forces when inserting one or more elongate flexible members, particularly through a pipe run which is not straight, whether the pipe is fully live or otherwise.

It is an aim of an embodiment or embodiments of the invention to at least partially overcome the problems associated with prior art systems.

### Brief Description of the Drawings

In order that the invention may be more clearly understood one or more embodiments thereof will now be described, by way of example only, with reference to the accompanying drawings, of which:
- Figure 1: is a schematic view of a cable insertion system according to an embodiment.
- Figure 2: is a diagrammatic representation of the coordination of push timing and pull timing of a method according to an embodiment.
- Figure 3: is a diagrammatic representation of a stagger delay between push period cessation and pull period commencement of a method according to an embodiment.
- Figure 4: is a diagrammatic representation of a pulsation of force during quasi-continuous push and pull periods which may occur in the method shown in Figure 2.
- Figure 5: is a schematic view of a cable insertion system according to an embodiment.
- Figure 6: is a detailed schematic of a force application assembly of a first embodiment to apply force to a cable.
- Figure 7a: is a detailed schematic of a force application assembly of a second embodiment to apply force to a cable.
- Figure 7b: is a detailed schematic of a force application assembly of a third embodiment to apply force to a cable.
- Figure 7c: is a detailed schematic of a force application assembly of a fourth embodiment to apply force to a cable.
- Figure 8: is a schematic of a micro-oscillation application assembly according to an embodiment.
- Figure 9: is a schematic view of a cable insertion system according to an embodiment showing data transfer between the first controller and second controller.
- Figure 10: is a detailed schematic showing initial setup parameters and adjustment over time according to an embodiment.
- Figure 11: is a detailed schematic showing initial setup parameters and adjustment over time according to another embodiment.
- Figure 12: is a detailed schematic showing initial setup parameters and adjustment over time according to a further embodiment.
- Figure 13: is a detailed schematic showing initial setup parameters and adjustment over time according to yet another embodiment.
- Figure 14: is a flowchart illustration of a method for installing a cable according to an embodiment showing adaptive control.

### Summary of the Invention

According to a broad aspect of the present invention, there is provided a method of laying one or more elongate flexible members through a pipe using a draw wire for which a first end of the draw wire is located at an exit end, outside of the pipe; a second end of the draw wire is located at an entry end, outside of the pipe; and an intermediary portion of the draw wire is located between the entry end and exit end within the pipe, the method comprising the steps of:
a) attaching a first end of the or each elongate flexible member to the second end of the draw wire;
b) pushing by applying a driving force, a first length of the or each elongate flexible member into the pipe over a first time T₁ in a direction from the entry end towards the exit end;
c) pulling by applying a pulling force, a second length of the draw wire through the pipe over a second time T₂ in the direction from the entry end towards the exit end; and
d) coordinating the first length and first time T₁ with the second length and second time T₂ to drive the or each elongate flexible member through the pipe.

According to another aspect of the present invention, there is provided a method of laying one or more elongate flexible members through a pipe comprising the steps of:
a) inserting a first end of a draw wire into the pipe through an entry end in the pipe to travel along the fluid pipe to an exit end;
b) withdrawing the first end of the draw wire from the pipe through the exit end in the pipe such that the first end of the draw wire is located at the exit end, outside of the pipe; a second end of the draw wire is located at the entry end, outside of the pipe; and an intermediary portion of the draw wire is located between the first and second ends of the draw wire, within the pipe;
c) attaching a first end of the or each elongate flexible member to the second end of the draw wire;
d) pushing by applying a driving force, a first length of the or each elongate flexible member into the pipe over a first time T₁ in a direction from the entry end towards the exit end;
e) pulling by applying a pulling force, a second length of the draw wire through the pipe over a second time T₂ in the direction from the entry end towards the exit end; and
f) coordinating the first length and first time T₁ with the second length and second time T₂ to drive the or each elongate flexible member through the pipe.

The pushing step and pulling step may be undertaken a number of times, successively to install the one or more elongate flexible members through a pipe or pipe run.

Providing a method as defined controls the load on the or each elongate flexible member and/or the draw wire to install the or each elongate flexible member in the pipe whilst remaining below a predetermined threshold to avoid damage to the or each elongate flexible member and/or the draw wire. This may allow automation of the installation/insertion of the or each elongate flexible member into the pipe. This may reduce time and staff necessary, de-skill the process and provide a more rapid and effective pull-through regime, particularly in cases where there are a number of bends/curves in a pipe or pipe network, or a more complex pipe lay and where operational parameters need to be changed adaptively and as an installation/insertion progresses through a pipe.

The method may be implemented to transfer the or each elongate flexible member through the pipe and subsequently out of the pipe at the exit end. This may occur until the or each elongate flexible member has a first end which is located at the exit end, outside of the pipe; an intermediary portion located within the pipe between the entry and exit ends; and the remainder of the or each elongate member is located at the entry end, outside of the pipe.

The one or more elongate flexible members may be or comprise any type of member, pipe or cable including a microduct, messenger pipe, cable, sensing pipe or the like. Reference to an 'elongate flexible member' or 'cable' in this document is intended to include all of the above.

In the context of the one or more elongate flexible members, the term 'flexible' is intended to cover members ranging from highly flexible to those which are relatively rigid, but which can still bend. The flexibility of an elongate member, particularly a cable with one or more elongate cores within an outer sheath for example, will depend on the composition of the or more elongate cores, the composition of the outer sheath and the composition of any bedding between the cores and the outer sheath. An armoured cable will be much less flexible than an unarmoured cable. The method of the present invention may be used in relation to any type of elongate flexible member, but highly flexible members are more easily inserted/installed into a pipe than a more rigid, but still flexible member. As mentioned above, the difficulty in insertion/installation into a pipe also increases dramatically with increasing weight of the cable, increasing rigidity of the cable and/or the difficult of the pipe run between entry and exit of the cable in terms of number and angle of any bends to be negotiated.

The method may comprise the step of inserting a first end of a draw wire into the pipe through an entry opening in the pipe at an entry end to travel along the pipe to an exit opening at an exit end. The insertion of the draw wire may be performed according to any method of insertion. One possible method of insertion is described in International Patent Publication No. WO2017081478.

Similarly, any method of withdrawing the first end of the draw wire from the pipe from the exit opening in the pipe may be utilised.

The method of the present invention may be implemented once a draw wire is provided in the pipe with a first end of the draw wire located at the exit end, a second end of the draw wire located at the entry end and attached to the first end of an elongate flexible member, with an intermediary portion of the draw wire located between the first and second ends of the draw wire within the pipe. **In** an alternative embodiment, the draw wire may be pulled through after initial insertion, such that the member may be pushed/pulled into the fluid pipe in the direction of flow. A liquid fluid flow may be present in the pipe and may assist the transit of the draw wire where the fluid pipe is live, and a fluid flow is present.

The method may comprise a step of attaching a first end of the or each elongate flexible member to the second end of the draw wire. Any method of attaching the first end of the or each elongate flexible member to the second end of the draw wire may be used. The attachment may occur at a connection interface. The attachment may be sufficiently robust to allow the draw wire to pull the or each elongate flexible member from the entry end to the exit end, allowing for any load on the or each elongate flexible member by the weight of the or each elongate flexible member, friction between the or each elongate flexible member and an interior surface of the pipe and any load which may be caused by a portion of the or each elongate flexible member and/or connection interface abutting any portion of the pipe network through which the or each elongate flexible member travels between the entry end and exit end.

The method may comprise the step of pushing a first length of the or each elongate flexible member into the pipe over a first time T₁, in a direction from the entry end towards the exit end. A first powered device or apparatus may be provided at the entry end to apply a driving force to the one or more elongate flexible members. The first length and/or first time T₁, may be determined and/or controlled by a first controller associated with the first powered device or apparatus. The first controller may adjust the first length and/or first time T₁.

The first length may be any dimension. The first length may be determined according to the parameters of the or each elongate flexible member and/or pipe and/or pipe run length between the entry end and the exit end. The first length may be up to 100 cm but may be optionally between 5 cm and 50 cm. A first rate may be determined utilising the first length and a first time T₁ period over which the first length is pushed into the pipe at the entry end. The first time period T₁ may have any length but may be between 1 second and 20 seconds.

A distance meter may be provided on the or each elongate flexible members and/or the first powered device or apparatus at the entry end to measure the length of the one or more elongate flexible members which is pushed into the pipe at the entry end. The distance meter may measure the length of the one or more elongate flexible members pushed into the pipe in each push step. The distance meter may measure the total length of the one or more elongate flexible members which has been installed into the pipe. The total length of the one or more elongate flexible members which has been installed into the pipe may be the distance from the connection interface to a point outside of the pipe at the entry end.

The distance meter may be linked to the first controller.

The first powered device or apparatus may apply a driving force to the or each elongate flexible member. A force sensor may be associated with the or each elongate flexible member to measure the driving force applied. The driving force may be provided in a linear direction, substantially parallel to the longitudinal axis of the or each elongate flexible member.

The first powered device or apparatus may apply a rotation force to the or each elongate flexible member. The rotation force may be provided contemporaneously with the driving force, or the rotation force may be provided at a different time to the application of the driving force. There may be circumstances in which the driving force and the rotation force are provided in an overlapping manner.

The method may comprise the step of pulling a second length of the draw wire through the pipe over a second time T₂, in the direction from the entry end toward the exit end. A second powered device or apparatus may be provided at the exit end to apply the pulling force to the draw wire. The second length and/or second time T₂may be determined and/or controlled by a second controller associated with the second powered device or apparatus provided at the exit end. The second controller may adjust the second length and/or second time T₂. The second length may be any dimension. The second length may be determined according to the parameters of the or each elongate flexible member and/or pipe and/or pipe run length between the entry end and the exit end. The second length may be up to 100 cm but may be optionally between 5 cm and 50 cm. The second rate may be determined utilising the second length and second time T₂ over which the second length is pulled from the exit end. The second time period T₂ may have any length but may be between 1 second and 20 seconds.

A distance meter may be provided on the or each elongate flexible members and/or the second powered device or apparatus at the exit end to measure the length of the draw wire which is pulled from the exit end. The distance meter may measure the length of the draw wire which is pulled from the exit in each pulling step. The distance meter may measure the total length of the draw wire which has been pulled from the pipe at the exit end. The total length of the draw wire which has been pulled from the pipe may be the distance from the first end of draw wire to the connection interface with the or each elongate flexible member. This may allow determination of the location of the connection interface, even when the connection interface is within the pipe run between the entry opening and exit opening.

The distance meter may be linked to the second controller provided at the exit end of the pipe run.

The second powered device or apparatus may apply a pulling force to the draw wire. A force sensor may be associated with the draw wire to measure the pulling force applied. The pulling force may be provided in a linear direction, substantially parallel to the longitudinal axis of the draw wire.

The pushing step and pulling step may be coordinated to control any load exerted on the or each elongate flexible member and/or the draw wire. The load may be maintained below a predetermined maximum load. The load exerted on the or each elongate flexible member and/or the draw wire may be a force comprising friction force, weight and/or applied forces arising from abutment of the or each elongate flexible member and/or draw wire with any internal surface of the pipe run.

The pushing and pulling step may be coordinated to occur contemporaneously.

Alternatively, the pushing step and pulling step may be coordinated to be staggered or offset wherein the pushing step occurs and ends, before the pulling step begins. In some circumstances, the pushing step and pulling step may at least partially overlap. Any stagger or offset may occur on a fixed basis. The stagger or offset may be calculated as a percentage of the first length, second length, first time T₁ or second time T₂. For example, the stagger or offset may be between 2% and 50% of the first time T₁ and/or second time T₂.

The stagger or offset may be varied on an adaptive basis by the first controller associated with the first powered device or apparatus at the entry end and/or the second controller associated with the second powered device or apparatus at the exit end.

The first controller provided at the entry end may be linked and/or in real time communication with the second controller provided at the exit end in order to coordinate the pushing step and pulling step.

The pushing step and pulling step may occur multiple times in order to move the first end of the or each elongate flexible member from entry end to the exit end, thereby installing the or each elongate flexible member within the pipe or pipe run.

The method may further comprise the step of additionally applying one or more variations to the driving force and/or pulling force. In one form, the driving force applied to the or each elongate flexible member may be varied over the length of the first time T₁. The pulling force applied to the draw wire may be varied over the length of the second time T₂. In some circumstances, the variations may occur in the driving force and the pulling force at the same time and to the same degree. The one or more variations may longitudinally oscillate or pulse the or each elongate flexible member and/or draw wire during the pushing step and/or pulling step.

The variations may be implemented on the pushing step only in relation to the driving force. The variations may be implemented on the pulling step only in relation to the pulling force. The one or more variations may comprise a micro-oscillation to the macro push/pull force applied by the first powered device and/or second powered device. The one or more variations may be adapted in real-time by the first controller and/or second controller based on the load on the or each elongate flexible member and/or draw wire during the pushing step and/or pulling step as required.

The one or more variations may be applied according to any regime. For example, the one or more variations may be provided at a particular frequency. The one or more variations may be provided by adjusting the magnitude of the driving force and/or pulling force.

The one or more variations may be provided according to a waveform characteristic having a frequency and an amplitude. The waveform may have any shape. In one embodiment, the waveform may comprise a square wave. In one form, the frequency of the variations in driving force and/or pulling force may be between 0.1 Hz to 1 Hz. The one or more variations may be provided in either a positive direction, that is from the entry end toward the exit end or in a negative direction, that is from an exit end toward the entry end. The one or more variations may be application of a reduction in driving force and/or pulling force, an increase in driving force and/or pulling force and/or a reversal of direction or any combination thereof. The one or more variations may have a variation of linear travel associated with the variation in force, which may be changed adaptively.

The magnitude of the driving force and/or pulling force may vary from 0 N to a maximum driving force or pulling force. The driving force and/or pulling force may be provided in either a positive direction, that is from the entry end toward the exit end or in a negative direction that is from an exit end toward the entry end.

The driving force and/or pulling force may be applied by applying a lateral, gripping force onto a portion of the one or more elongate flexible member to grip the one or more elongate flexible member and then applying a longitudinal driving force and/or pulling force to move the one or more elongate flexible member and/or draw wire longitudinally.

The gripping force may controlled/adjustable. The gripping force may be controlled/adjustable in real time,

The driving force and/or pulling force may be controlled/adjustable. The driving force and/or pulling force may be controlled/adjustable in real time.

According to a further aspect of the present invention, there is provided a system for laying one or more elongate flexible members through a pipe, the system comprising: a draw wire for which a first end of the draw wire is located at an exit end, outside of the pipe; a second end of the draw wire is located at an entry end, outside of the pipe; and an intermediary portion of the draw wire is located between the entry end and exit end within the pipe with a first end of the or each elongate flexible member attached to the second end of the draw wire;
a supply of one or more elongate flexible member at the entry end;
a first powered device to apply a driving force to the one or more elongate flexible member to push a first length of the or each elongate flexible member into the pipe over a first time T₁, in a direction from the entry end towards the exit end;
a second powered device to apply a pulling force to the draw wire to pull a second length of the draw wire through the pipe over a second time T₂, in the direction from the entry end towards the exit end; and
a first controller associated with the first powered device to control the driving force, the first length and first time T₁;
a second controller associated with the second powered device to control the pulling force, second length and second time T₂;
Wherein the first controller and second controller are in real time communication to drive the or each elongate flexible member through the pipe.

The or each elongate flexible member may be provided on a supply drum. The or each elongate flexible member may be associated with a reeler to feed the or each elongate flexible member from the supply drum into the pipe at the entry.

The first powered device may be provided relative to a pipe entry fitting on the pipe.

The one or more elongate flexible member may extend through the first powered device. The one or more elongate flexible member may extend through the first powered device longitudinally.

The first powered device applies a driving force to the one or more elongate flexible member. The driving force may be applied by applying a lateral, gripping force onto a portion of the one or more elongate flexible member to grip the one or more elongate flexible member and then applying a longitudinal driving force to move the one or more elongate flexible member longitudinally forward, into the pipe.

At least one force sensor may be provided to measure the lateral, gripping force, and/or the longitudinal driving force.

Any mechanism may be provided to apply lateral, gripping force, and/or the longitudinal driving force.

**In** one embodiment, the mechanism may comprise at least one roller or wheel to apply both the gripping force and the driving force. **In** another embodiment, the mechanism may comprise at least one pair of opposed rollers or wheels, one of the rollers or wheels of the at least one pair on one side of the one or more elongate flexible member and the other of the rollers or wheels of the at least one pair on an opposite side of the one or more elongate flexible member to apply both the gripping force and the driving force.

More than one pair of rollers or wheels could be used.

Where two or more rollers or wheels are provided, the rollers may be provided in one or more stages with at least a pair of rollers in each stage. The stages may be provided one after the other along a length of the one or more elongate flexible member in the mechanism. In one embodiment, multiple stages of one or more rollers or wheels may be provided in the first powered device to provide the driving force.

More than a pair of rollers or wheels could be used, for example three rollers or wheels may be spaced circumferentially about the one or more elongate flexible member in a single stage, at approximately 120° orientation to each other on three sides, or four rollers or wheels may be spaced circumferentially about the one or more elongate flexible member in a single stage, at approximately 90° orientation to each other on four sides.

The first powered device may control/adjust the gripping force. The gripping force may be controlled/adjustable in real time, based on force measurements from the force sensor. The first controller at the entry end may control/adjust the gripping force.

The first powered device may control/adjust the driving force. The driving force may be controlled/adjustable in real time, based on force measurements from the force sensor. The first controller at the entry end may control/adjust the driving force.

At least one of the rollers or wheels may be driven rotationally to provide the driving force. More than one of the rollers or wheels may be driven rotationally. The first powered device may control/adjust the speed or rate of rotation of any one or more of the rollers in real time.

The first controller at the entry end may control/adjust the length of the one or more elongate flexible member driven forward and/or the first rate at which the one or more elongate flexible member is driven forward and/or the timing (stagger relative to the pulling step) in each pushing step.

The driving and/or gripping force applied may be estimated for each point in a pipe or pipe run dependent on the layout of the pipe or pipe run and/or the characteristics of the one or more elongate flexible member. For example, if the physical layout of the pipe or pipe run is known, and the characteristics of the one or more elongate flexible member to be installed is also known, an estimate of a passive force which may be exerted onto the one or more elongate flexible member at any position in the pipe or pipe run can be calculated. This estimate can then be used by the first controller to set an actual driving force to be exerted on the one or more elongate flexible member during a particular push step. The first controller may use the estimated passive force and add an amount to establish the driving force to be applied. A maximum driving force to be applied may also be set to minimise or prevent any damage to the one or more elongate flexible member. The mechanism may then apply the driving force above the estimated passive force and below the maximum force, to drive the one or more elongate flexible member into the pipe in a push step. If the first controller is notified of the application of a driving force which approaches (equals, or exceeds) the maximum force, then the first controller may stop the push step. Corrective action may then be taken to ensure that the one or more elongate flexible member is released from any obstruction preventing installation. The calculation may be performed at the second controller, or at a remote controller and transmitted to the first controller.

The applied driving force may be measured in real time using the force sensor.

The applied driving force may be compared to the estimated passive force. The comparison can be used as a basis to adjust the application of one or more variations to the driving force and/or pulling force as explained above.

This comparison may occur dependent on the location of the connection interface within the pipe. As mentioned above, the location of the connection interface can be determined using a distance meter on the one or more elongate flexible member and/or the draw wire.

At least one of the rollers or wheels may be movable laterally to provide the gripping force. More than one of the rollers or wheels may be movable laterally.

Any one or more of the rollers or wheels may be driven in a forward and/or reverse direction. Any one or more of the rollers or wheels may be driven in a forward direction during the push step and then movement in the reverse direction may be prevented to prevent any reverse movement of the one or more elongate flexible member.

Any one or more of the rollers or wheels may be provided with a gripping surface or configuration. The gripping surface or configuration may be a high friction surface or configuration provided on any one or more of the rollers or wheels oriented towards the one or more elongate flexible member. For example, any one or more of the rollers or wheels may be provided with a resilient material. Any one or more of the rollers or wheels may be provided with an elastomeric material. Any one or more of the rollers or wheels may be provided with one or more gripping fingers or ridges or the like.

In another embodiment, a belt may be provided about rollers or wheels on the same lateral side of the one or more elongate flexible member. The belt may be formed as an endless loop. The provision of a belt about the rollers or wheels may increase the effective gripping/driving area on the one or more elongate flexible member. This may allow the use of a lower gripping force and/or driving force through a more effective application of the gripping force and/or driving force to the one or more elongate flexible member.

The belt may be provided with a gripping surface or configuration. The gripping surface or configuration may be a high friction surface or configuration provided on the belt oriented towards the one or more elongate flexible member and/or the rollers or wheels. For example, the belt may be provided with a resilient material. The belt may be provided with an elastomeric material. The belt may be provided with one or more gripping fingers or ridges or the like.

In another embodiment, the mechanism to apply the lateral, gripping force, and/or the longitudinal driving force may comprise a linear motion actuator associated with a gripper device to grip the one or more elongate flexible member. Any form of gripper device may be used. More than one linear motion actuator could be used. In such embodiments, the linear motion actuators are spaced about the one or more elongate flexible member. The more than one linear motion actuator may act on one or more gripper devices.

In one form, the gripper device may include at least one cam positioned to apply the gripping force and the driving force to the one or more elongate flexible member when the linear motion actuator moved in the push direction. More than one cam may be provided circumferentially. More than one cam may be provided longitudinally over a length of the one or more elongate flexible member.

Any type of linear motion actuator may be provided. The linear motion actuator may be hydraulic, pneumatic or electrically driven.

A second powered device to apply a pulling force to the draw wire to pull a second length of the draw wire through the pipe at a second rate in the direction from the entry opening towards the exit opening.

The second powered device may have any one or more of the features described with reference to the first powered device, but configured to apply a pulling force to the draw wire instead of applying a pushing or driving force to the one or more flexible elongate members.

The system may comprise a first controller associated with the first powered device to control the driving force, the first length and first time T₁. The first controller may control all aspects of each push step and the overall number of push steps undertaken to install the one or more flexible elongate members into the pipe from the entry end to the exit end. The first controller may communicate via a communications link with the first powered device.

A second controller associated with the second powered device to control the driving force, second length and second time T₂. The second controller may control all aspects of each pull step and the overall number of pull steps undertaken to install the one or more flexible elongate members into the pipe from the entry opening to the exit opening. The second controller may communicate via a communications link with the second powered device.

Each of the first controller and second controller may be a local control unit at the first powered device and second powered device respectively. The first controller and second controller may communicate with each other via a communications link. This communication may allow the first controller and second controller to co-ordinate push/pull parameters and sequencing between the first controller and second controller.

A system controller may be provided to control and coordinate the first controller and second controller, which in turn control the first powered device and second powered device.

Data inputs/outputs to the first controller, second controller and/or system controller may comprise data from and/or instructions to the first powered device, second powered device, force sensors, distance meters and any spooling control. The first controller, second controller and/or system controller may utilise this data to provide continuous adaptive control of operational parameters to optimise the installation/insertion of the one or more elongate flexible members, particularly in terms of performance and speed.

Any communications link used may be a radio link.

In one form, the communications link may comprise a bi-directional, low-latency radio data link which may typically be WiFi, WLAN, VHF/UHF, IoT link or similar. In some embodiments, the communications link is not based on cellular data. Such a link therefore does not rely on the presence of an acceptable signal from a cell tower or device as this may not be guaranteed in all locations. An omnidirectional antenna could be used. A directed or higher gain, directional antenna may be used for more challenging communication paths.

The first powered device and second powered device may apply the driving force and pulling force respectively. The first powered device and second powered device may also apply the additionally applied one or more variations to the driving force and/or pulling force. Alternatively, a separate device may be provided to apply the one or more variations. Such a separate device may apply one or more variations to the first powered device and/or second powered device as a whole. For example, the separate device may apply the one or more variations to a housing containing the first powered device and/or second powered device.

As mentioned above, the characteristics of the one or more variations may be controlled/adjusted by the first controller, the second controller or both, and/or a system controller.

One or more of the first controller, the second controller and a system controller may adaptively control one or more parameters to install the one or more flexible elongate members in the pipe.

The system may have a number of initial setup parameters. The initial setup parameters may define one or more set point, maximum and/or minimum values for operational parameters such as:
- an initial and/or maximum driving force,
- an initial and/or maximum pulling force,
- an initial, a minimum and/or maximum first length,
- an initial, a minimum and/or maximum second length,
- an initial, a minimum and/or maximum first time, T₁, and/or
- an initial, a minimum and/or maximum second time, T₂.

The initial setup parameters may be selectable as 'Route predictive' (that is, dependent on the route for the installation), 'Default', or 'Manual Set'.

As explained above, the system may measure one or more measured parameters during operation. The one or more measured parameters may comprise:
- the driving force,
- the pulling force,
- the first length,
- the second length, and/or
- the route length (the length of the pipe route transited at any moment in time between the entry end and the exit end).

The system may have one or more adaptively controlled parameters, controlled by one or more of the first controller, the second controller and a system controller. The one or more adaptively controlled parameters may be adapted in real-time, during the installation. The one or more adaptively controlled parameters may comprise:
- actual driving force
- actual pulling force
- first length
- second length
- first time, T₁, (which with the first length, determines the first rate)
- second time, T₂ (which with the second length determines the second rate)
- variation time or velocity on the driving force
- variation time or velocity on the pulling force
- offset period
- overlap period T3
- Stagger period T4
- Multiple pull-out vs pull-in period
- Variation set on/off
- Variation frequency and/or
- Variation displacement/length.

The installation may begin with the initial setup parameters being set for the particular installation required. The installation may then begin with the initial setup parameters. The apparatus may monitor the measured parameters as the installation proceeds, at the entry end and/or the exit end. The measured parameters may be transmitted between one or more of the first controller, the second controller and a system controller.

One or more of the first controller, the second controller and a system controller may then undertake multiple successive nested loop decisions (if-then decisions) and iteratively adjust one or more of the adaptively controlled parameters. Any parameter which does not excess a value within the initial setup parameters maximum may be retained, unchanged. The order of adjustment of the adaptively controlled parameters may be varied.

As the adaptively controlled parameters are adjusted, the measured parameters may continue to be measured to provide data for the interactive adjustment of the adaptively controlled parameters. The adaptively controlled parameters may be transmitted between one or more of the first controller, the second controller and a system controller to coordinate the adaptively controlled parameters.

One or more of the first controller, the second controller and a system controller may also receive the measured parameter of route length. Once the route length of cable has been installed (a measured parameter), one or more of the first controller, the second controller and a system controller may cease operation. Until the measured parameter of route length has been satisfied, the installation method may continue, with the adaptively controlled parameters adjusted in real-time.

The apparatus may be used to implement the method as described above. The pushing step and pulling step may be undertaken a number of times, successively to install the one or more elongate flexible members through a pipe or pipe run.

In the context of the present application, the term 'fluid' in relation to a fluid pipe or conduit may refer to any material, liquid or gaseous, including fuels such as oil or gas or associated distillates, additionally in industrial uses which may include mining and similar, the invention may more specifically refer to a primarily water-based fluid, such as potable water, pre-treatment water, wastewater or water-based slurries.

Similarly, in the context of the present application, the term 'pipe' or 'conduit' may refer to any fluid conduit used to convey a fluid (gas, liquid or a mixture including a slurry) between two points, spaced apart at or below local ground level. In particular, the 'pipe' or 'conduit' may traverse at a relatively regular displacement from local ground level, without requiring the 'pipe' or 'conduit' to be horizontal. Thus, the terms "pipe" and "fluid pipe" may be used interchangeably.

The pipe into which the one or more elongate flexible members is to be inserted/installed may be a single unbranched length of pipe. In such embodiments, the one or more elongate flexible members may run along the pipe from one end to the other. In other such embodiments, the one or more elongate flexible members may run in a loop from one end of the pipe to the other end and back again.

The pipe in which the one or more elongate flexible members is to be inserted/installed may comprise a branched network of pipes or part of a branched network of pipes. In such embodiments the is to be inserted/installed may run in a loop from an entry point to the far end of each branch in turn.

The branched network may be any suitable branched network of pipes. In one example, the branched network is a district metered area of a water supply network.

### Detailed Description of the Invention

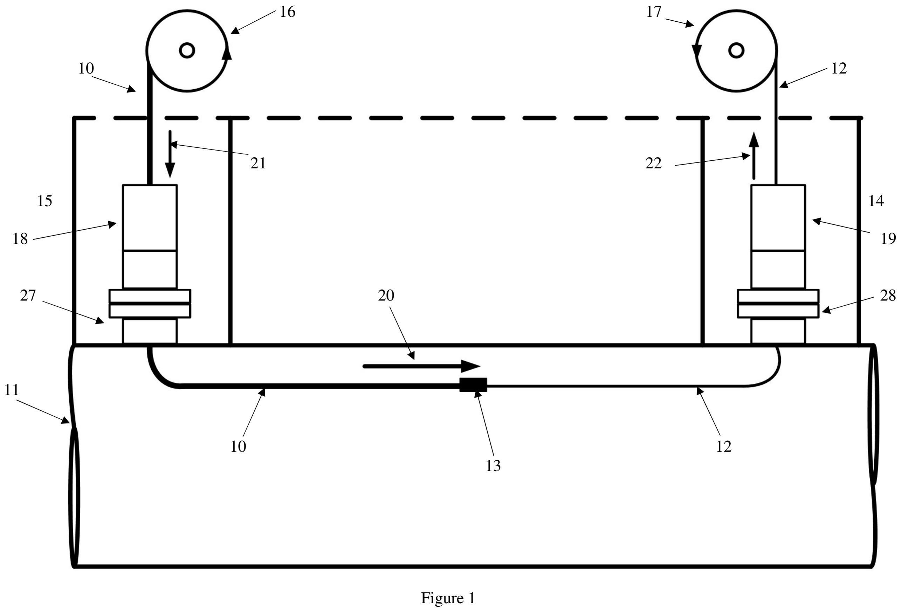

A preferred embodiment of a system for laying one or more elongate flexible cables 10 through a pipe 11 is illustrated in Figure 1. As shown in Figure 1, the system comprises a draw wire 12 for which a first end of the draw wire 12 is located at an exit end 14, outside of the pipe 11 a second end of the draw wire 12 is initially located at an entry end 15, outside of the pipe 12 and an intermediary portion of the draw wire 12 is located between the entry end 15 and exit end 14 within the pipe 11 with a first end of the elongate flexible cable 10 attached to the second end of the draw wire 11 at a connection interface 13. A person skilled in this art would appreciate that the term 'cable' also covers other elongate flexible members such as microducts and messenger pipes.

As shown, there is a supply of elongate flexible cable 10 at the entry end 15 on a supply drum or reel 16 and a second supply drum or reel 17 is provided at the exit end 14, onto which the draw wire 12 is wound as it exits the pipe 11.

A first powered device 18 is provided at the entry end 15 to apply a driving force 21 to the elongate flexible cable 10 to push a first length of the elongate flexible cable 10 into the pipe at a first rate in a direction 20 from the entry end 15 towards the exit end 14.

A second powered device 19 is provided at the exit end 15 to apply a pulling force 22 to the draw wire 12 to pull a second length of the draw wire 12 through the pipe 11 at a second rate in the direction 20 from the entry end 15 towards the exit end 14.

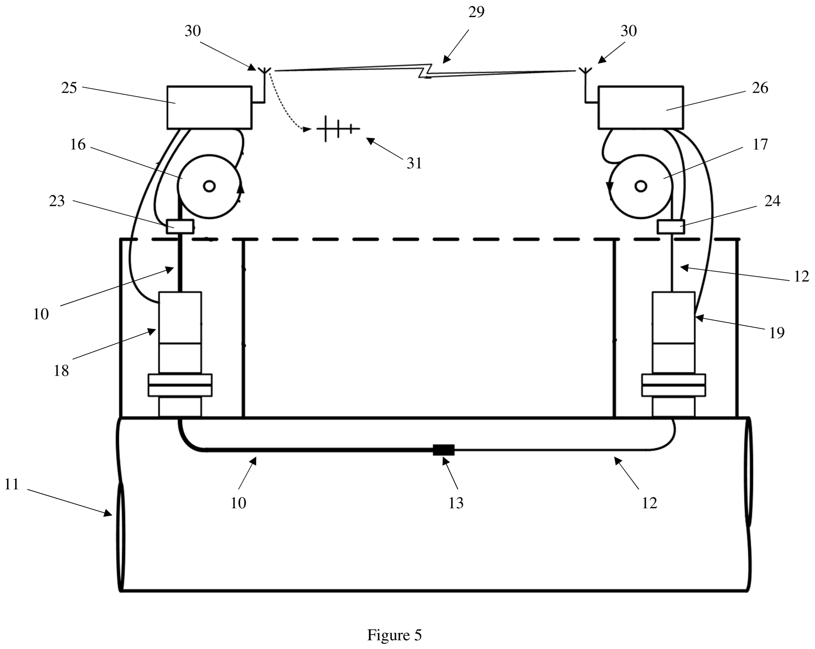

As shown best in Figure 5, a first controller 25 is provided associated with the first powered device 18, the supply drum or reel 16 and a distance meter 23 to control the driving force, the first length and first rate. A second controller 26 associated with the second powered device 19, the supply drum or reel 17 and a distance meter 24 to control the pulling force, second length and second rate. As shown in Figure 5, the first controller 25 and second controller 26 are in real time communication with each other to drive the or each elongate flexible cable 10 into the pipe 11 and have the draw wire 12 pull the connection interface 13 from the entry end 15 to the exit end 14.

Communication between the first controller 25 and second controller 26 may be via a bi-directional low-latency radio data link 29 which may typically be WiFi, WLAN, VHF/UHF, IoT or similar but is ideally not a cellular data network (which relies on the presence of an acceptable signal from a cell which cannot be guaranteed in all locations). An omnidirectional antenna 30 can be used or a specific higher gain directional antenna 31 could be used for more challenging radio paths.

As shown, the first powered device 18 is mounted to a pipe entry fitting 27 on the pipe 11 via a mounting flange and the second powered device 19 is similarly mounted to a pipe exit fitting 28 on the pipe 11.

The elongate flexible cable extends through the first powered device 18 longitudinally.

In the illustrated embodiments, the driving force 21 applied to the elongate flexible cable 10 is applied by applying a lateral, gripping force onto a portion of the elongate flexible cable 10 to grip the one or more elongate flexible member and then applying a longitudinal driving force 21 to move the elongate flexible cable 10 longitudinally forward, into the pipe 11.

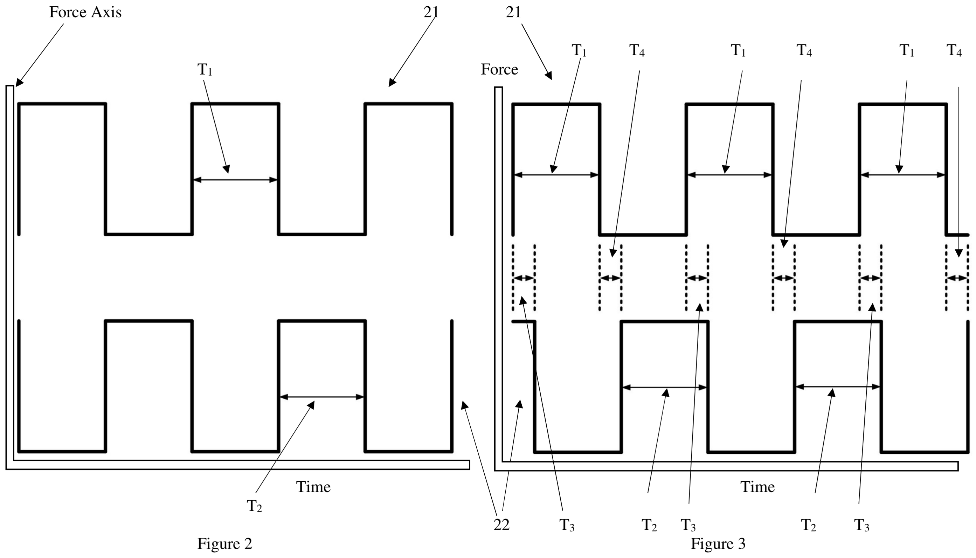

The application of the driving force to drive a first length of the elongate flexible cable 10 into the pipe 11 over a first time T₁ and the application of the pulling force to pull a second length of the draw wire 12 through the pipe 11 over a second time T₂ is coordinated, as shown graphically in the examples of Figures 2 to 4.

As shown in Figure 2, the driving force to drive the first length into the pipe 12 is applied over the first time period T₁ as shown in Figure 2. In Figure 2, the driving force 21 is applied while there is no pulling force 22 applied. Once the driving force application step has been completed, the pulling force 22 is applied over the second time period T₂ to pull the second length from the pipe 12. As shown in Figure 2, there is a sequence of steps of alternating application of driving force 21 to drive a first length of the elongate flexible cable 10 into the pipe 11 at a first rate (first length over first time T₁) followed by the application of the pulling force 22 to pull a second length of the draw wire 12 through the pipe 11 at a second rate (second length over second time T₂), with the driving and pulling steps undertaken a number of times, successively to install the elongate flexible cable 10 through a pipe 11.

The method may be implemented until the elongate flexible cable 10 has a first end which is located at the exit end 14 outside of the pipe 12, an intermediary portion located within the pipe 11 between the entry 15 and exit 14 ends and the remainder of the elongate cable 10 is located at the entry end 15, outside of the pipe 11.

The method shown in the Figures takes for granted that the draw wire 12 is already in place but the method may comprise the step of inserting a first end of a draw wire 12 into the pipe 11 through an entry opening at an entry end of the pipe 11 to travel along the pipe 11 to an exit opening at the exit end of the pipe 11. The insertion of the draw wire may be performed according to any method of insertion. One possible method of insertion is described in International Patent Publication No. WO2017081478.

The method of the present invention may be implemented once a draw wire 12 is provided in the pipe 11 with a first end of the draw wire 12 located at the exit end 14, a second end of the draw wire 12 located at the entry end 15 and attached to the first end of an elongate flexible cable 10 to be installed in the pipe 11, with an intermediary portion of the draw wire 12 located between the first and second ends of the draw wire 12 within the pipe 11.

The first length and/or first rate (first length over first time T₁) may be determined and/or controlled by the first controller 25. The first controller 25 may adjust the first length and/or first rate as required, in real time and in response to information provided to the first controller 25 such as force applied to the elongate flexible cable and/or draw wire and/or the layout of the pipe or pipe run.

For example, the first length may be determined according to the parameters of the elongate flexible cable 10 and/or pipe 11 and/or pipe run length between the entry end 15 and the exit end 14. The first length may be up to 100 cm but may be between 5 cm and 50 cm. The first rate may be determined utilising the first length and a first time T₁ over which the first length is driven into the entry end 15. The first time T₁ may have any length but may be between 1 second and 20 seconds.

As mentioned above, a distance meter 23 may be provided at the entry end 15 to measure the first length of the elongate flexible cable 10 which is driven into the entry end 15. The distance meter 23 may measure the length of cable 10 driven in each drive step. The distance meter 23 may also measure the overall length of the elongate flexible cable 10 which has been installed into the pipe 12. The length of the elongate flexible cable 10 which has been installed into the pipe 12 may be the distance from the connection interface 13 to a point outside of the pipe 12 at the entry end 15.

The distance meter 23 may be linked to the first controller 23 provided at the entry end 15 of the pipe 11 as shown in Figure 5.

A force sensor (not shown in Figure 1) may also be associated with the elongate flexible cable 10 to measure the driving force 21 applied. The driving force 21 may be provided in a linear direction, substantially parallel to the longitudinal axis of the elongate flexible cable 10.

The second length and/or second rate (second length over second time T₂) may be determined and/or controlled by the second controller 26 associated with the second powered device 19 provided at the exit end 14. The second controller 26 may adjust the second length and/or second rate as required, in real time and in response to information provided to the second controller 26.

For example, the second length may be determined according to the parameters of the or each elongate flexible cable 10 and/or pipe 11 and/or pipe run length between the entry end 15 and the exit end 14. The second length may be up to 100 cm but may be between 5 cm and 50 cm. The second rate may be determined utilising the second length and a second time period T₂, over which the second length is pulled from the exit end 14. The second time period T₂, may have any length but may be between 1 second and 20 seconds.

As mentioned above, a distance meter 24 may be provided at the exit end 14 to measure the length of the draw wire 12 which is pulled from the exit end 14. The distance meter 24 may measure the length of the draw wire 12 withdrawn in each pulling step. The distance meter 26 may also measure the overall length of the draw wire 12 which has been pulled from the pipe 11 at the exit end 14. The length of the draw wire 12 which has been pulled from the pipe 11 may be the distance from the first end of draw wire 12 to the connection interface 13 with the elongate flexible cable 10. This may allow determination of the location of the connection interface 13, even when within the pipe run between the entry end 15 and exit end 14.

The distance meter 24 may be linked to the second controller 26 provided at the exit end 14 of the pipe 11 as shown in Figure 5.

A force sensor (not shown in Figure 5) may be associated with the draw wire 12 to measure the pulling force applied. The pulling force may be provided in a linear direction, substantially parallel to the longitudinal axis of the draw wire 12.

The pushing step and pulling step may be coordinated by the first controller 25 and second controller 26 to maintain any load exerted on the elongate flexible cable 10 and/or the draw wire 12 above a load required to insert/install the elongate flexible cable into the pipe and below a predetermined maximum load. The load exerted on the elongate flexible cable 10 and/or the draw wire 12 may be a force comprising friction force, weight of the cable 10 and the draw wire 12, and/or applied forces arising from abutment of the elongate flexible cable 10 and/or draw wire 12 with any internal surface of the pipe run.

As explained above with reference to Figure 2, the pushing and pulling steps may be coordinated to occur offset or opposite to one another. Alternatively, as shown in Figure 3, the driving/pushing and pulling steps may be coordinated to be staggered or offset where the pushing step occurs and ends, before the pulling step begins. In some circumstances, the pushing step and pulling step may at least partially overlap. Any stagger or offset may occur on a fixed basis. The stagger or offset may be calculated as a percentage of the first length, second length, first time T₁ or second time T₂. For example, the stagger or offset may be between 2% and 50% of the first time T₁and/or second time T₂. As shown in Figure 3, the driving force 21 may be applied for a short overlap time T₃, while the pull phase is still ongoing. The push phase may then end before the pull phase starts, staggered by time T₄. This may allow the push phase to 'settle' motion in pipe 11 prior to the pull phase commencing. In Figure 3, time T₃, is equal to time T₄, but this need not be the case. The first time period T₁ (the drive force application time) and second time period T₂ (the pull force application time) are equal in Figure 3, but overlapped/staggered in application.

The stagger or offset may be varied on an adaptive basis by the first controller 25 associated with the first powered device 18 at the entry end 15 and/or the second controller 26 associated with the second powered device 19 at the exit end 14. The skilled person will appreciate that a stagger time T4, may be provided as an opposed overlap where a pull force commences before the push force has ceased.

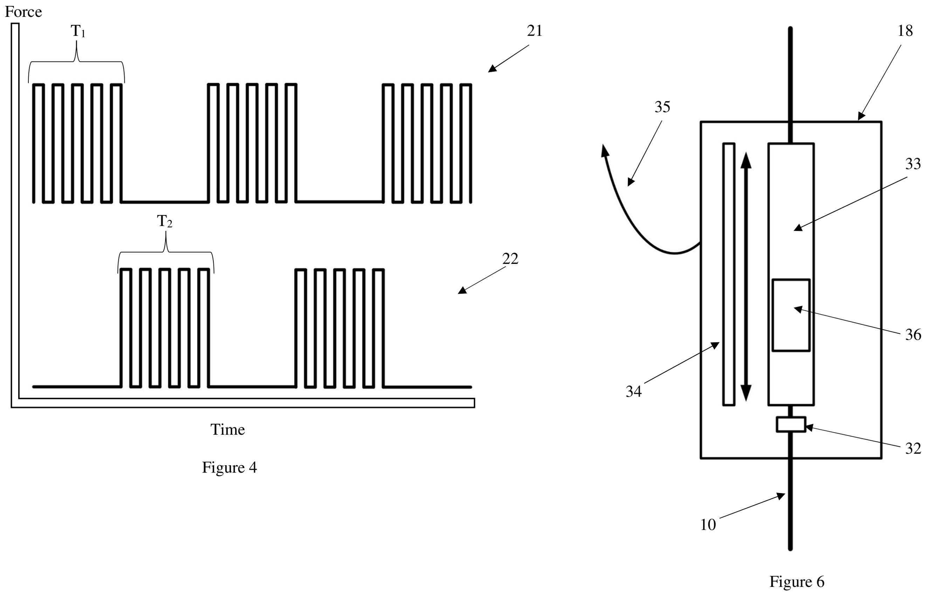

Further, as shown in Figure 4, the method may further comprise the step of additionally applying one or more variations to the driving force 21 and/or pulling force 22. In one form, the driving force applied to the elongate flexible cable 10 may be varied over the length of the first time period, T₁. The pulling force 22 applied to the draw wire 12 may be varied over the length of the second time period, T₂. In some circumstances, the variations may occur at the same time and to the same degree in relation to the driving force 21 and the pulling force 22.

The variations may be applied according to any regime. For example, the variations may be provided at a particular frequency. The variations may be provided by adjusting the magnitude of the driving force and/or pulling force. The variations may be provided by adjusting the lateral displacement parameter in concert with the defined oscillation magnitude. In the embodiment illustrated in Figure 4, the driving force 21 is applied in blocks interspersed with blocks of application of the pulling force 22. Each block of drive force is applied over the first time T₁, with the driving force in each block cycling between five driving force applications and four zero force applications in each first time T₁ block. Similarly, each block of pulling force is applied over the second time T₂, with the pulling force in each block cycling between five pulling force applications and four zero force applications in each second time T₂ block.

The variations may be provided according to a waveform characteristic having a frequency and an amplitude. The waveform may have any shape. In a preferred form, the frequency of the variation in driving force 21 and/or pulling force 22 may be between 0.1 Hz to 1 Hz. The variations shown in Figure 4 alternate between a driving force 21 and/or pulling force 22 applied in a positive direction, that is from the entry end 15 toward the exit end 14 and a reduction/removal in driving force 21 and/or pulling force 22.

Although not shown in the Figures, at least one force sensor may be provided to measure the lateral, gripping force, and/or the longitudinal driving force 21.

Any mechanism may be provided to apply lateral, gripping force, and/or the longitudinal driving force 21 to the elongate flexible cable 10. The same or similar or a different mechanism may be provided to apply lateral, gripping force, and/or the longitudinal pulling force 22 to the draw wire 12.

Figure 6 shows an example of the first powered device 18 and/or second powered device 19. This example (discussed with reference to the first powered device 18 and the cable 10, but which can be applied to the second powered device 19 and the draw wire 12) includes a force sensor 32 to measure driving or pulling force (depending on the location of the device). The force sensor 32 provides data for use by the first controller 25 and/or second controller 26 to adaptively modify and optimise operational parameters. The first powered device 18 includes a mechanism 33 to apply the driving force 21 to the cable 12. The first powered device 18 of Figure 6 includes a push/pull linear motion transducer 34. The first powered device 18 of Figure 6 includes a control & telemetry link 35 to the first controller 25. The first powered device 18 of Figure 6 also includes a push/pull rotary motion transducer 36.

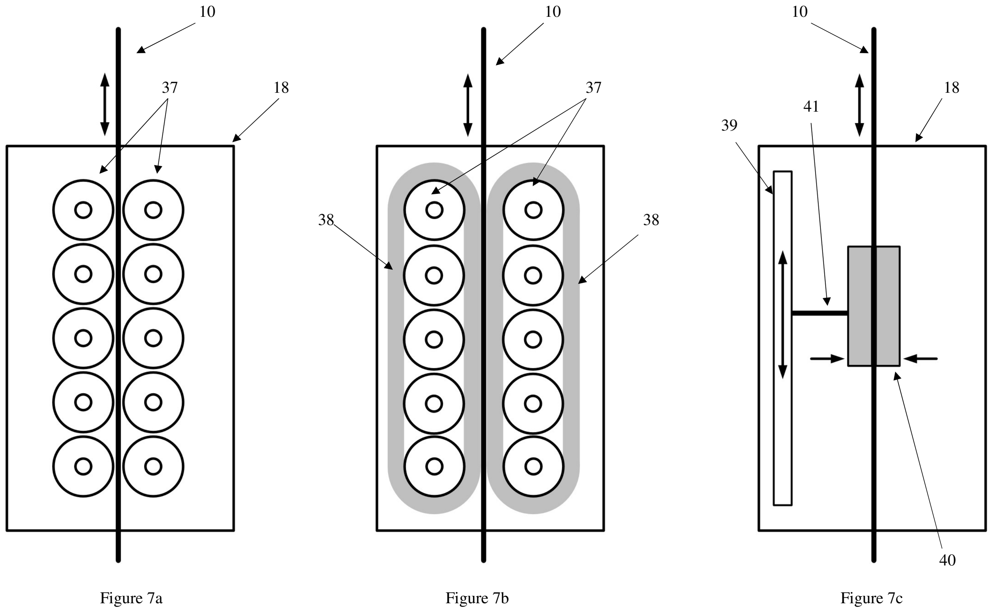

Examples of mechanism 33 are shown in Figures 7a to 7c. Again, the examples in Figures 7a to 7c are explained with reference to the first powered device 18 at the entry end 15 to provide the driving force 21, but are equally applicable at the exit end 14 to provide the pulling force 22.

The mechanism in Figure 7a comprises a number of opposed pairs of rollers 37 or wheels to apply both the gripping force and the driving force 21, with one of the rollers 37 or wheels of each pair on one side of the elongate flexible cable 10 and the other of the rollers 37 or wheels of the pair on an opposite side of the elongate flexible cable 10 to apply both the lateral gripping force and the longitudinal driving force 31.

More than one pair of rollers 37 or wheels could be used as shown provided in stages. The stages are provided one after the other along a length of the elongate flexible cable 10 in the mechanism.

The gripping force may be controlled/adjustable. The gripping force may be controlled/adjustable in real time, based on force measurements from the force sensor 32. The first controller 25 at the entry end 15 may control/adjust the gripping force.

The driving force 21 may also be controlled/adjustable. The driving force 21 may be controlled/adjustable in real time, based on force measurements from the force sensor 32. The first controller 25 at the entry end 15 may control/adjust the driving force 21.

At least one of the rollers 37 or wheels, and optionally more than one of the rollers or wheels may be driven rotationally to provide the driving force 21. The speed or rate of rotation of any one or more of the rollers 37 may be controlled/adjustable in real time.

The driving and/or gripping force required to be applied to the elongate flexible cable 10 may be estimated for each point in a pipe 11 or pipe run dependent on the layout of the pipe 11 or pipe run and/or the characteristics of the elongate flexible cable 10. For example, if the physical layout of the pipe 11 or pipe run is known, and the characteristics of the one or more elongate flexible cable 10 to be installed is also known, an estimate of a passive force which may be exerted onto the one or more elongate flexible cable 10 at any position in the pipe 11 or pipe run can be calculated. This estimate can then be used by the first controller 25 and/or second controller 26 to set an actual driving force to be exerted on the one or more elongate flexible cable 10 during a particular push step and/or draw wire 12 in a pull step, to move the elongate flexible cable 10 toward the exit end 14. The first controller 25 and/or second controller 26 may use the estimated passive force and add an amount to establish the driving force 21 to be applied. A maximum driving force to be applied may also be set to prevent any damage to the one or more elongate flexible cable 10 and/or draw wire 12. The mechanism may then apply the driving force 21 above the estimated passive force and below the maximum force, to drive the one or more elongate flexible cable 10 into the pipe 11 in a push step. If the first controller 25 and/or second controller 26 is notified of the application of a driving force 21 which approaches (or equals, or exceeds) the maximum force, then the first controller 25 and/or second controller 26 may stop the push step. Corrective action may then be taken to ensure that the one or more elongate flexible cable 10 is released from any obstruction preventing installation.

The applied driving force 21 may be measured in real time using the force sensor 32.

The applied driving force 21 may be compared to the estimated passive force. The comparison can be used as a basis to adjust the application of one or more variations to the driving force 21 and/or pulling force as explained above.

This comparison may occur dependent on the location of the connection interface 13 within the pipe 11. As mentioned above, the location of the connection interface 13 can be determined using a distance meter 23, 24 on the one or more elongate flexible cable 10 and/or the draw wire 12.

Any one or more of the rollers 37 or wheels may be driven in a forward and/or reverse direction. Any one or more of the rollers 37 or wheels may be driven in a forward direction to provide the driving force 21 during the push step, and then movement in the reverse direction may be prevented, to prevent any reverse movement of the elongate flexible cable 10.

The roller 37 or wheel may be provided with a gripping surface or configuration. The gripping surface or configuration may be a high friction surface or configuration provided on the roller 37 or wheel oriented towards the one or more elongate flexible cable 10. For example, the roller 37 or wheel may be provided with a resilient or elastomeric material.

In another embodiment shown in Figure 7b, a belt 38 may be provided about the rollers 37 or wheels on the same lateral side of the one or more elongate flexible cable 10. The belt 38 shown is formed as an endless loop.

In another embodiment shown in Figure 7c, the mechanism to apply the lateral, gripping force, and/or the longitudinal driving force may comprise a linear motion actuator 39 associated with a cable gripper device 40 to grip the one or more elongate flexible cable.

Any form of gripper device 40 may be used. In one form, the gripper device 40 may include at least one cam positioned to apply the gripping force and the driving force to the one or more elongate flexible member when the linear motion actuator is moved in the push direction.

Any type of linear motion actuator 39 may be provided. The linear motion actuator may be hydraulic, pneumatic or electrically driven. In the embodiment shown in Figure 7c, the gripper device 40 is mounted to the linear motion actuator 39 by a rigid linkage arm 41.

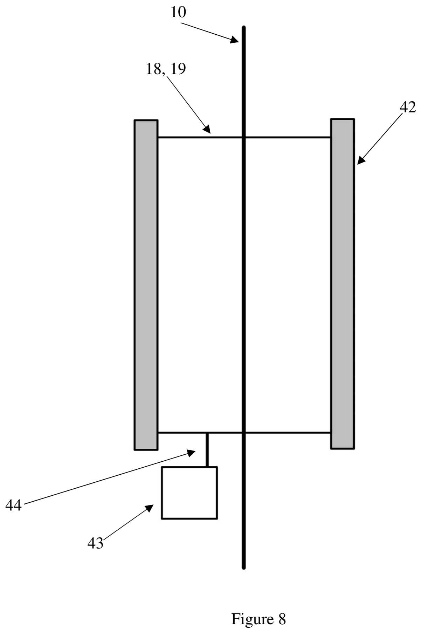

The first powered device 18 and second powered device 19 may apply the driving force 21 and pulling force 22 respectively. The first powered device 18 and second powered device 19 may also apply the additionally applied one or more variations to the driving force 21 and/or pulling force 22. Alternatively, a separate device 42, an example of which is shown in Figure 8, may be provided to apply the one or more variations. The illustrated device includes a linear slide rail 42 to apply one or more variations to the first powered device 18 and/or second powered device 19 as a whole. For example, the device may apply the one or more variations to a housing containing the first powered device 18 and/or second powered device 19. Control of the device to apply the variations may be through a separate controller 43 through an appropriate linkage 44.

As mentioned above, the second powered device 19 may have any one or more of the features described with reference to the first powered device 18 but configured to apply a pulling force 22 to the draw wire 12 instead of applying a driving force 21 to the one or more flexible elongate cable 10.

Each of the first controller 25 and second controller 26 may be a local control unit provided at the first powered device 18 and second powered device 19 respectively. As explained above, the first controller 25 and second controller 26 may communicate with each other via a communications link 29. This communication link 29 may allow the first controller 25 and second controller 26 to co-ordinate push/pull parameters and sequencing between the push step and the pull step.

One or more of the first controller, the second controller and a system controller may adaptively control one or more parameters to install the one or more flexible elongate members in the pipe.

The system may have a number of initial setup parameters. The initial setup parameters may define one or more maximum and/or minimum values for operational parameters such as:
- an initial and/or maximum driving force,
- an initial and/or maximum pulling force,
- an initial, a minimum and/or maximum first length,
- an initial, a minimum and/or maximum second length,
- an initial, a minimum and/or maximum first time, T₁, and/or
- an initial, a minimum and/or maximum second time, T₂.

### INITIAL SET-UP PARAMETERS

S1 - DSP_{SP} - 'Default' system parameters set
S2 - RPP_{SP} - 'Route-Predictive' system parameters set
S3 - AFI_{SP} - End A 'Cable Push-in' force initial set
S4 - AFIM_{SP} - End A 'Cable Push-in' maximum force set
S5 - BFO_{SP} - End B 'Draw Line Pull-out' force initial set
S6 - BFOM_{SP} - End B 'Draw Line Pull-out' maximum force set
S7 - ASL_{SP} - 'Cable Push-in' length initial set
S8 - ASLMA_{SP} - 'Cable Push-in' maximum length
S9 - ASLMI_{SP} - 'Cable Push-in' minimum length
S10 - BSL_{SP} - 'Draw Line Pull-out' length initial set
S11 - BSLMA_{SP} - 'Draw Line Pull-out' maximum length
S12 - BSLMI_{SP} - 'Draw Line Pull-out' minimum length
S13 - ASP_{SP} - 'Cable Push-in' period initial set
S14 - ASPMA_{SP} - 'Cable Push-in' maximum period
S15 - ASPMI_{SP} - 'Cable Push-in' minimum period
S16 - BSP_{SP} - 'Draw Line Pull-out' period initial set
S17 - BSPMA_{SP} - 'Draw Line Pull-out' maximum period
S18 - BSPMI_{SP} - 'Draw Line Pull-out' minimum period

The initial setup parameters may be selectable as 'Route predictive' (that is, dependent on the route for the installation), 'Default', or 'Manual Set'.

As explained above, the system may measure one or more measured parameters during operation. The measured parameters may comprise:
- the driving force,
- the pulling force,
- the first length,
- the second length, and/or
- the route length (the length of the pipe route between the entry end and the exit end).

### MEASURED PARAMETERS

M1 - AFI_{MP} - End A 'Cable Push-in' force measurement
M2 - BFO_{MP} - End B 'Draw Line Pull-out' force measurement
M3 - ASL_{MP} - 'Cable Push-in' length measurement
M4 - BSL_{MP} - 'Draw Line Pull-out' length measurement
M5 - RDM_{MP} - Route deployment length measurement

The system may have one or more adaptively controlled parameters, controlled by one or more of the first controller, the second controller and a system controller. The one or more adaptively controlled parameters may be adapted in real-time, during the installation. The one or more adaptively controlled parameters may comprise:
- actual driving force
- actual pulling force
- first length
- second length
- first time, T₁, (which with the first length, determines the first rate)
- second time, T₂ (which with the second length determines the second rate)
- variation time or velocity on the driving force
- variation time or velocity on the pulling force
- offset period
- overlap period T3
- Stagger period T4
- Multiple pull-out vs pull-in period
- Variation set on/off
- Variation frequency and/or
- Variation displacement/length.

### ADAPTIVELY CONTROLLED PARAMETERS

A1 - AFI_{SP} - End A 'Cable Push-in' force set
A2 - BFO_{SP} - End B 'Draw Line Pull-out' force set
A3 - ASL_{SP} - Schoogle 'Cable Push-in' length set
A4 - BSL_{SP} - Schoogle 'Draw Line Pull-out' length set
A5 - ASP_{SP} - Schoogle 'Cable Push-in' period & fixed motion velocity set
A5 - BSP_{SP} - Schoogle 'Draw Line Pull-out' period & fixed motion velocity set
A6 - ASV_{SP} - Schoogle 'Cable Push-in' period & variable motion velocity set
A7 - BSV_{SP} - Schoogle 'Draw Line Pull-out' period & variable motion velocity set
A8 - SPO_{SP} - Schoogle period off-set between End A/B set
A9 - SPM_{SP} - Multiple pull-out vs pull-in Schoogle period set
A10 - SHO_{SP} - Shimmy operation set on/off
A11 - SHF_{SP} - Shimmy frequency set
A12 - SHD_{SP} - Shimmy displacement set

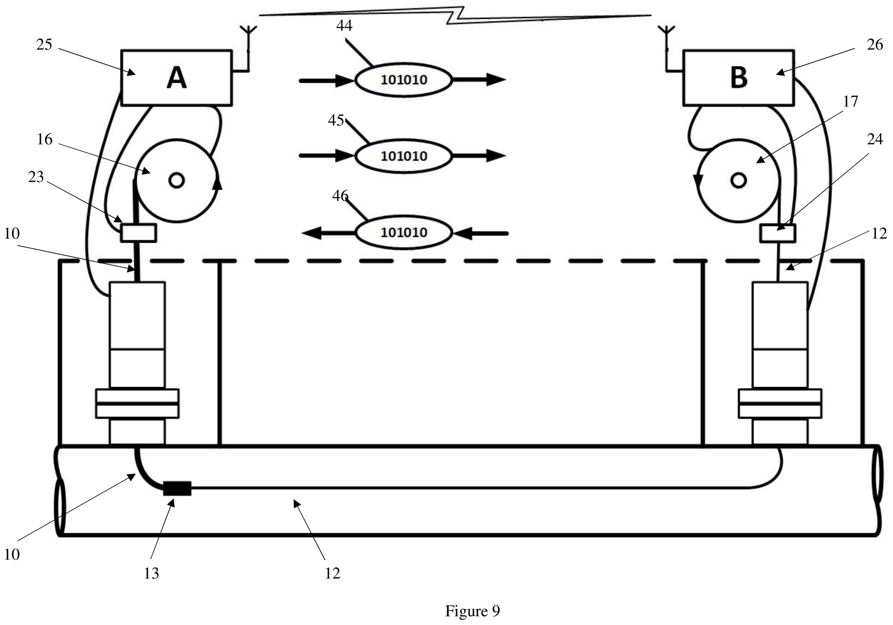

As shown in Figure 9, the installation may begin with the initial setup parameters being set for the particular installation required. The installation process may then begin with the initial setup parameters. In the configuration shown in Figure 9, the first controller 25 at the entry end (A) operates as a Master Control Unit and the second controller 26 at the exit end (B) operates as a Slave Control Unit. As shown, once set, the initial set-up parameters 44 are transmitted by the Master Control Unit 'A' to the Slave Control Unit 'B'.

The apparatus may monitor the measured parameters 46 as the installation proceeds. As shown in Figure 9, the measured parameters 46 measured at the exit end B are transmitted to the Master Control Unit 'A' at the entry end.

The Master Control Unit 'A' may then undertake multiple successive nested loop decisions (if-then decisions) and iteratively adjust one or more of the adaptively controlled parameters 45. The adaptively controlled parameters 45 are transmitted from the Master Control Unit 'A' at the entry end to the Slave Control Unit 'B' at the exit end to coordinate the adaptively controlled parameters.

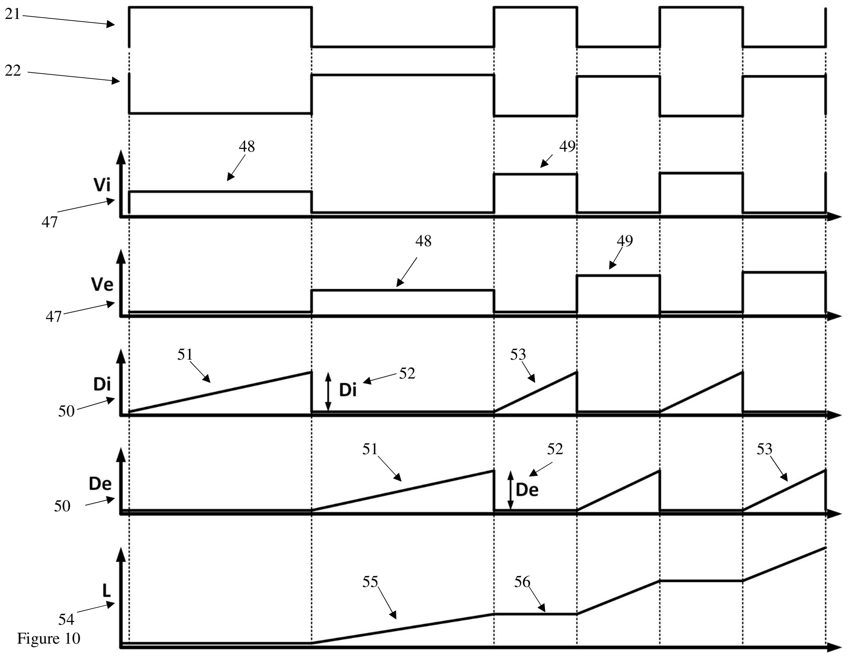

A possible driving force 21 profile and pulling force 22 profile are illustrated in Figure 10. As illustrated, the driving force 21 and pulling force 22 applied are equal and opposite to one another in this embodiment, but as explained above, may vary.

Also shown in Figure 10 is the set velocity (Vi) 47 of the driving force vs time and the set velocity (Ve) 47 of the pulling force vs time. As shown in the Vi and Ve profiles, the set velocity (Vi) of driving force 21 and the set velocity (Ve) of the pulling force motion periodicity may be varied adaptively with the velocity being lower in a longer period 48 and possibly being higher within a shorter period 49.

Also shown in Figure 10 is the displacement 50 (Di = first length and De = second length) vs time. As shown in Figure 10, the displacement length may be slower within a longer period 51 and more rapid within a shorter period 53. There is also a linear period 52 in Di and De, in which there is no displacement, to allow settling to occur.

An overall inserted length 54 measured to the connection interface 13 of the cable being pulled in vs time is shown in Figure 10. The overall inserted length profile shows the length increasing 55 as the cable is pulled on the application of the pulling force 22 and remaining unchanged during the driving force phase 56.

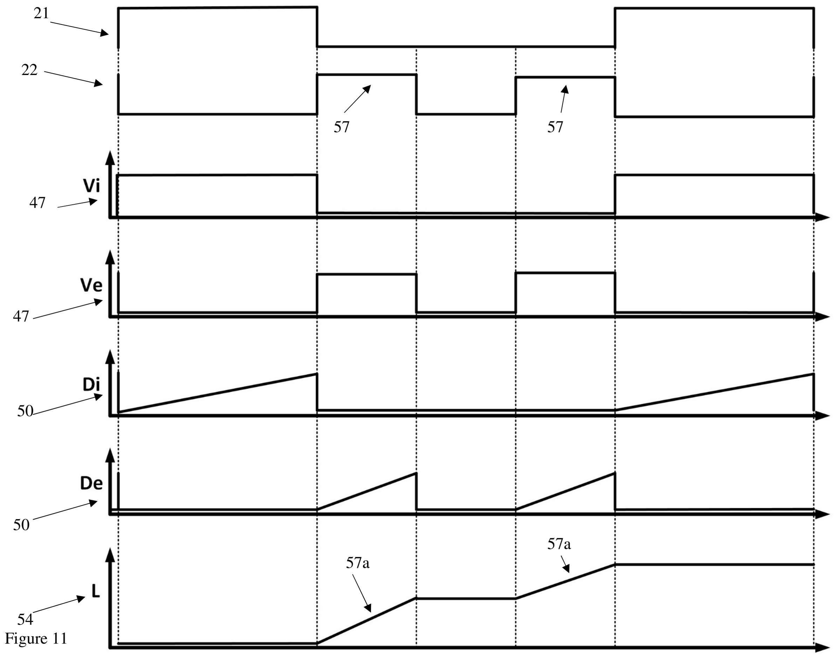

Figure 11 shows a different application of driving force 21 profile and pulling force 22 profile. In this embodiment, two (or more) separate applications 57 of pulling force 22 are made between successive applications of the driving force. This may allow additional time for the system to 'settle' in between applications of the pulling force 22 (two shorter applications of the pulling force 22 rather than one longer application of pulling force 22). As shown in the associated overall inserted length profile 54, the actual length installed then occurs over two (or more) corresponding staged periods 57a.

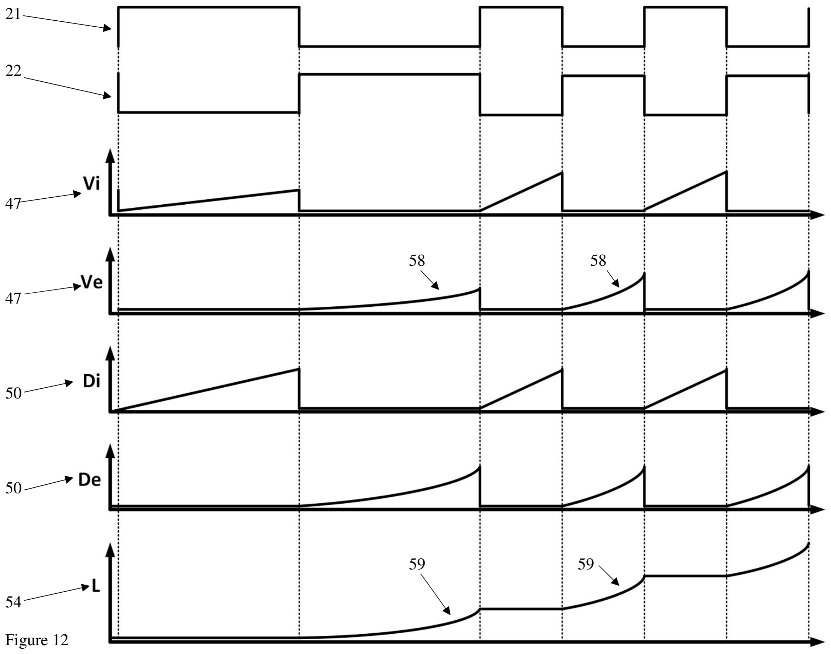

Figure 12 shows a different application of driving force 21 profile and pulling force 22 profile. In this embodiment, the rate of change of velocity 58 of the pulling force 22 may vary adaptively over the second time T₂. This may assist with minimising/mitigating the inertial mass movement force of the cable. As shown in the associated overall inserted length profile 54, the actual length installed 59 then increases with an increasing velocity during the second time T₂.

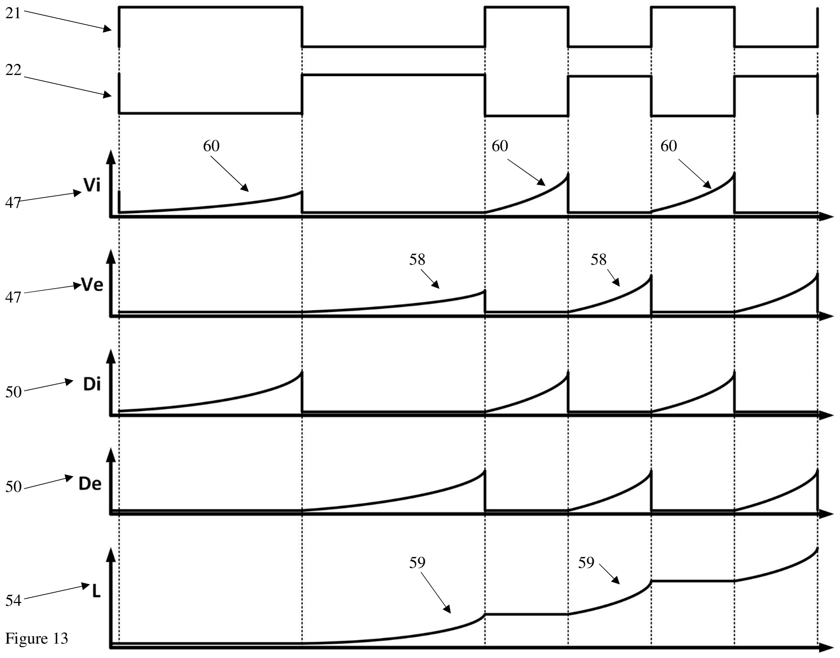

Figure 13 is similar to Figure 12 in that the rate of change of velocity 58 of the pulling force 22 may vary adaptively over the second time T₂. The rate of change of velocity of driving force 21 may also vary adaptively over T₁.

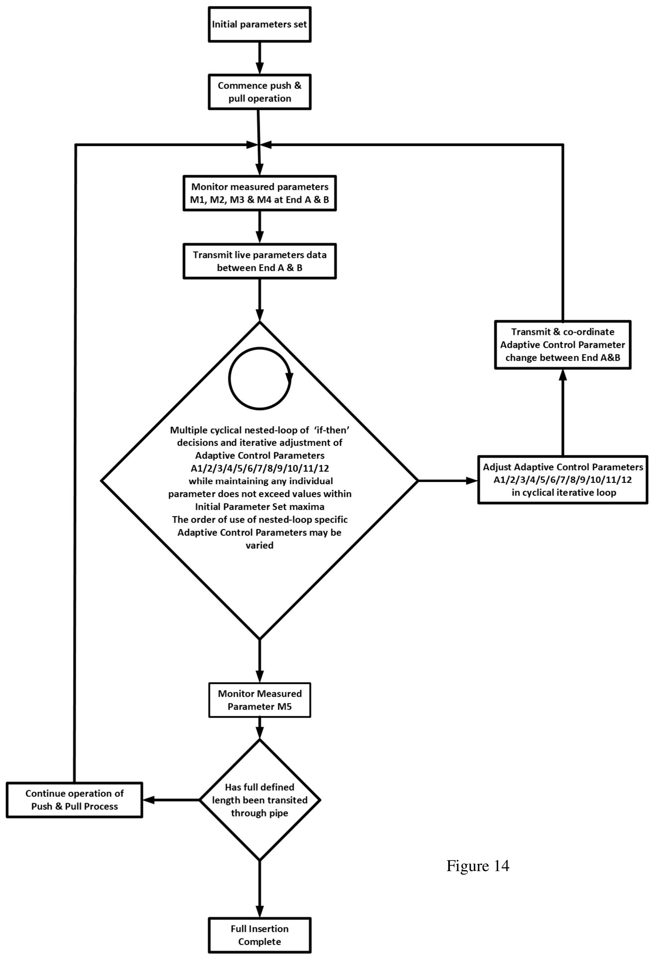

As mentioned above, Figure 14 the installation may begin with the initial setup parameters being set for the particular installation required. The installation process may then begin with the initial setup parameters. As shown in Figure 14, once set, the initial set-up parameters are transmitted between the first controller at the entry end (A in Figure 9) and the second controller at exit end (B in Figure 9).

The apparatus may monitor the measured parameters M1 to M4 at both ends A and B as the cable installation proceeds. The measured parameters are transmitted between the first controller at the entry end (A in Figure 9) and the second controller at exit end (B in Figure 9).

One or more of the first controller, the second controller and a system controller may then undertake multiple successive nested loop decisions (if-then decisions) and iteratively adjust one or more of the adaptively controlled parameters (A1 to A12). The adaptively controlled parameters are transmitted between the first controller at the entry end (A in Figure 9) and the second controller at exit end (B in Figure 9) to coordinate the adaptively controlled parameters.

Any parameter which does not exceed a value within the initial setup parameters maximum may be retained, unchanged. The order of adjustment in the adaptively controlled parameters A1 to A12 may be varied. As the adaptively controlled parameters A1 to A12 are adjusted, the measured parameters M1 to M4 continue to be measured to provide data for the interactive adjustment of the adaptively controlled parameters A1 to A12.

One or more of the first controller, the second controller and a system controller also receives the measured parameter of route length M5. Once the route length M5 of cable has been installed (a measured parameter), one or more of the first controller, the second controller and a system controller may cease operation. Until the measured parameter of route length M5 has been satisfied, the installation method may continue, with the adaptively controlled parameters A1 to A12 adjusted in real-time.

The following numbered paragraphs additionally describe embodiments of the invention and each may be combined with any one or more of the features of the invention and its embodiments as described above.
1. A method of laying one or more elongate flexible members through a pipe using a draw wire for which a first end of the draw wire is located at an exit end, outside of the pipe; a second end of the draw wire is located at an entry end, outside of the pipe; and an intermediary portion of the draw wire is located between the entry end and exit end within the pipe, the method comprising the steps of:
   a) attaching a first end of the or each elongate flexible member to the second end of the draw wire;
   b) pushing by applying a driving force, a first length of the or each elongate flexible member into the pipe over a first time T₁ in a direction from the entry end towards the exit end;
   c) pulling by applying a pulling force, a second length of the draw wire through the pipe over a second time T₂ in the direction from the entry end towards the exit end; and
   d) coordinating the first length and first time T₁ with the second length and second time T₂ to drive the or each elongate flexible member through the pipe.
2. A method of laying one or more elongate flexible members through a pipe as claimed in paragraph 1 further including the steps of:
   i. inserting the first end of the draw wire into the pipe through the entry end in the pipe to travel along the fluid pipe to the exit end;
   ii. withdrawing the first end of the draw wire from the pipe at the exit end in the pipe such that the first end of the draw wire is located at the exit end, outside of the pipe; a second end of the draw wire is located at the entry end, outside of the pipe; and an intermediary portion of the draw wire is located between the first and second ends of the draw wire within the pipe.
3. A method according to paragraph 1 or paragraph 2 wherein the pushing step and pulling step are undertaken multiple times, successively to install the one or more elongate flexible members through a pipe.
4. A method according to any one of the preceding paragraphs wherein a first rate is determined utilising the first length and the first time period T₁, over which the first length is pushed into the pipe at the entry end.
5. A method according to any one of the preceding paragraphs further comprising the step of measuring the first length of each pushing step.
6. A method according to any one of the preceding paragraphs further comprising the step of measuring a total length of the or each elongate flexible member which has been installed into the pipe being the distance from a connection interface between the draw wire and the one or more elongate flexible members to a point outside of the pipe at the entry end.
7. A method according to any one of the preceding paragraphs wherein the driving force is exerted in a linear direction, substantially parallel to a longitudinal axis of the or each elongate flexible member.
8. A method according to any one of the preceding paragraphs further comprising the step of measuring the driving force applied.
9. A method according to any one of the preceding paragraphs wherein a second rate is determined utilising the second length and the second time period T₂, over which the second length is pulled from the pipe at the exit end.
10. A method according to any one of the preceding paragraphs further comprising the step of measuring the second length of each pulling step.
11. A method according to any one of the preceding paragraphs further comprising the step of measuring a total length of the draw wire which removed from the pipe being the distance from a connection interface between the draw wire and the or each elongate flexible member to a point outside of the pipe at the exit end.
12. A method according to any one of the preceding paragraphs wherein the pulling force is exerted in a linear direction, substantially parallel to a longitudinal axis of the draw wire.
13. A method according to any one of the preceding paragraphs further comprising the step of measuring the pulling force applied.
14. A method according to any one of the preceding paragraphs wherein the pushing step occurs and ends, before the pulling step begins, or the pulling step occurs and ends before the pushing step begins.
15. A method according to any one of the preceding paragraphs wherein the driving force is applied for a short overlap time T₃, while the pulling force is still applied, or the pulling force is applied for a short overlap time T₃, while the driving force is still applied.
16. A method according to any one of the preceding paragraphs wherein the driving force ceases before the pulling force is applied, staggered by time T₄, or the pulling force ceases before the driving force is applied, staggered by time T₄.
17. A method according to any one of the preceding paragraphs further comprising the step of applying one or more variations to the driving force and/or pulling force.
18. A method according to paragraph 17 wherein the driving force applied to the or each elongate flexible member is varied over the length of the first time period T₁.
19. A method according to paragraph 17 or paragraph 18 wherein the pulling force applied to the draw wire is varied over the length of the second time period T₂.
20. A method according to any one of paragraphs 17 to 19 wherein the one or more variations longitudinally oscillate or pulse the or each elongate flexible member and/or draw wire during the pushing step and/or pulling step.
21. A method according to any one of paragraphs 17 to 20 wherein the one or more variations are provided by adjusting a magnitude of the driving force and/or pulling force.
22. A method according to any one of paragraphs 17 to 20 wherein the one or more variations are provided according to a waveform characteristic having a frequency and an amplitude.
23. A system for laying one or more elongate flexible members through a pipe, the system comprising
   a) a draw wire for which a first end of the draw wire is located at an exit end, outside of the pipe; a second end of the draw wire is located at an entry end, outside of the pipe; and an intermediary portion of the draw wire is located between the entry end and exit end within the pipe with a first end of the or each elongate flexible member attached to the second end of the draw wire;
   b) A supply of one or more elongate flexible member at the entry end;
   c) A first powered device to apply a driving force to the one or more elongate flexible member to push a first length of the or each elongate flexible member into the pipe over a first time T₁ in a direction from the entry end towards the exit end;
   d) A second powered device to apply a pulling force to the draw wire to pull a second length of the draw wire through the pipe over a second time T₂ in the direction from the entry opening towards the exit end; and
   e) A first controller associated with the first powered device to control the driving force, the first length and first time T₁;
   f) A second controller associated with the second powered device to control the pulling force, second length and second time T₂;
   wherein the first controller and second controller are in real time communication to drive the or each elongate flexible member through the pipe.
24. A system as claimed in paragraph 23 further comprising a distance meter provided on the or each elongate flexible member to measure the length of the one or more elongate flexible members which is pushed into the entry end, the distance meter linked to the first controller.
25. A system as claimed in paragraph 23 or paragraph 24 wherein the one or more elongate flexible member extends through the first powered device longitudinally to apply the driving force to the one or more elongate flexible member.
26. A system as claimed in any one of paragraphs 23 to 25 wherein the driving force is applied by applying a lateral, gripping force onto a portion of the one or more elongate flexible member to grip the one or more elongate flexible member and applying a longitudinal driving force to move the one or more elongate flexible member longitudinally forward, into the pipe.
27. A system as claimed in paragraph 26 further comprising at least one force sensor provided to measure the lateral, gripping force, and/or the longitudinal driving force in real-time.
28. A system as claimed in paragraph 26 or paragraph 27 wherein the driving and/or gripping force applied is estimated for each point in a pipe dependent on a layout of the pipe and/or characteristics of the one or more elongate flexible member and the first controller sets an actual driving force to be exerted on the one or more elongate flexible member during a particular push step to exceed the estimated driving and/or gripping force required.
29. A system as claimed in paragraph 28 wherein a maximum driving force to be applied is set to prevent any damage to the one or more elongate flexible member, the first controller controlling application of the actual driving force above the estimated driving and/or gripping force and below the maximum driving force.
30. A system as claimed in any one of paragraphs 26 to 29 comprising at least one roller or wheel to apply the lateral, gripping force, and/or the longitudinal driving force.
31. A system as claimed in paragraph 30 comprising at least one pair of opposed rollers or wheels, one of the rollers or wheels of the at least one pair on one side of the one or more elongate flexible member and the other of the rollers or wheels of the at least one pair on an opposite side of the one or more elongate flexible member to apply both the gripping force and the driving force.
32. A system as claimed in paragraph 31 further comprising a belt provided about the rollers or wheels on the same lateral side of the one or more elongate flexible member.
33. A system as claimed in any one of paragraphs 26 to 29 further comprising a linear motion actuator associated with a gripper device to grip the one or more elongate flexible member and apply the longitudinal driving force.
34. A system as claimed any one of paragraphs 23 to 33 further comprising a distance meter provided on the draw wire to measure the length of the draw wire which is pulled from the exit end, the distance meter linked to the second controller.
35. A system as claimed in any one of paragraphs 23 to 34 wherein the draw wire extends through the second powered device longitudinally to apply the pulling force to the draw wire.
36. A system as claimed in any one of paragraphs 23 to 35 wherein the pulling force is applied by applying a lateral, gripping force onto a portion of the draw wire to grip the draw wire and applying a longitudinal pulling force to move the draw wire longitudinally forward, through the pipe.
37. A system as claimed in paragraph 36 further comprising at least one force sensor provided to measure the lateral, gripping force, and/or the longitudinal pulling force in real-time.
38. A system as claimed in paragraph 36 or paragraph 37 wherein the pulling and/or gripping force applied is estimated for each point in a pipe dependent on a layout of the pipe and/or characteristics of the one or more elongate flexible member and/or characteristics of the draw wire and the first controller sets an actual driving force to be exerted on the draw wire during a particular pull step to exceed the estimated pulling and/or gripping force required.
39. A system as claimed in paragraph 38 wherein a maximum pulling force to be applied is set to prevent any damage to the one or more elongate flexible member and/or draw wire, the second controller controlling application of the actual pulling force above the estimated pulling and/or gripping force and below the maximum pulling force.
40. A system as claimed in any one of paragraphs 36 to 39 comprising at least one roller or wheel to apply the lateral, gripping force, and/or the longitudinal pulling force.
41. A system as claimed in paragraph 40 comprising at least one pair of opposed rollers or wheels, one of the rollers or wheels of the at least one pair on one side of the draw wire the other of the rollers or wheels of the at least one pair on an opposite side of the draw wire to apply both the gripping force and the pulling force.
42. A system as claimed in paragraph 41 further comprising a belt provided about the rollers or wheels on the same lateral side of the draw wire.
43. A system as claimed in any one of paragraphs 36 to 39 further comprising a linear motion actuator associated with a gripper device to grip the draw wire and apply the longitudinal pulling force.
44. A system as claimed in any one of paragraphs 23 to 43 wherein the first controller communicates with the second controller via a communications link to co-ordinate the sequencing and characteristics of the pushing step and the pulling step.
45. A system as claimed in paragraph 44 wherein the communications link is a radio link.
46. A system as claimed in any one of paragraph 23 to 45 wherein the first powered device and/or second powered device apply one or more variations to the driving force and/or pulling force by varying the driving force applied to the or each elongate flexible member over the length of the first time period T₁ and/or by varying the pulling force applied to the draw wire over the length of the second time period T₂.
47. A system as claimed in any one of paragraph 23 to 45 wherein a variation device applies one or more variations to the driving force and/or pulling force by varying the driving force applied to the or each elongate flexible member over the length of the first time period T₁ and/or by varying the pulling force applied to the draw wire over the length of the second time period T₂.
48. A system as claimed in any one of paragraphs 23 to 47 implementing a method as claimed in any one of claims 1 to 22.

The one or more embodiments are described above by way of example only. Many variations are possible without departing from the scope of protection afforded by the appended claims.

## Claims

1. A method of laying one or more elongate flexible members through a pipe using a draw wire for which a first end of the draw wire is located at an exit end, outside of the pipe; a second end of the draw wire is located at an entry end, outside of the pipe; and an intermediary portion of the draw wire is located between the entry end and exit end within the pipe, the method comprising the steps of:
a) attaching a first end of the or each elongate flexible member to the second end of the draw wire;
b) pushing by applying a driving force, a first length of the or each elongate flexible member into the pipe over a first time T₁ in a direction from the entry end towards the exit end;
c) pulling by applying a pulling force, a second length of the draw wire through the pipe over a second time T₂ in the direction from the entry end towards the exit end; and
d) coordinating the first length and first time T₁ with the second length and second time T₂ to drive the or each elongate flexible member through the pipe.

2. A method of laying one or more elongate flexible members through a pipe as claimed in claim 1 further including the steps of:
i. inserting the first end of the draw wire into the pipe through the entry end in the pipe to travel along the fluid pipe to the exit end;
ii. withdrawing the first end of the draw wire from the pipe at the exit end in the pipe such that the first end of the draw wire is located at the exit end, outside of the pipe; a second end of the draw wire is located at the entry end, outside of the pipe; and an intermediary portion of the draw wire is located between the first and second ends of the draw wire within the pipe.

3. A method according to claim 1 or claim 2 wherein the pushing step and pulling step are undertaken multiple times, successively to install the one or more elongate flexible members through a pipe.

4. A method according to any one of the preceding claims wherein the driving force is applied for a short overlap time T₃, while the pulling force is still applied, or the pulling force is applied for a short overlap time T₃, while the driving force is still applied.

5. A method according to any one of the preceding claims wherein the driving force ceases before the pulling force is applied, staggered by time T₄, or the pulling force ceases before the driving force is applied, staggered by time T₄.

6. A method according to any one of the preceding claims further comprising the step of applying one or more variations to the driving force and/or pulling force.

7. A method according to claim 6 wherein the driving force applied to the or each elongate flexible member is varied over the length of the first time period T₁, or wherein the pulling force applied to the draw wire is varied over the length of the second time period T₂.

8. A method according to claim 6 or claim 7 wherein the one or more variations longitudinally oscillate or pulse the driving force and/or pulling force applied to the or each elongate flexible member and/or draw wire during the pushing step and/or pulling step.

9. A system for laying one or more elongate flexible members through a pipe, the system comprising:
a) a draw wire for which a first end of the draw wire is located at an exit end, outside of the pipe; a second end of the draw wire is located at an entry end, outside of the pipe; and an intermediary portion of the draw wire is located between the entry end and exit end within the pipe with a first end of the or each elongate flexible member attached to the second end of the draw wire;
b) a supply of one or more elongate flexible member at the entry end;
c) a first powered device to apply a driving force to the one or more elongate flexible member to push a first length of the or each elongate flexible member into the pipe over a first time T₁ in a direction from the entry end towards the exit end;
d) a second powered device to apply a pulling force to the draw wire to pull a second length of the draw wire through the pipe over a second time T₂ in the direction from the entry opening towards the exit end; and
e) a first controller associated with the first powered device to control the driving force, the first length and first time T₁;
f) a second controller associated with the second powered device to control the pulling force, second length and second time T₂;
wherein the first controller and second controller are in real time communication to drive the or each elongate flexible member through the pipe.

10. A system as claimed in claim 9 wherein the driving force is applied by applying a lateral, gripping force onto a portion of the one or more elongate flexible member to grip the one or more elongate flexible member and applying a longitudinal driving force to move the one or more elongate flexible member longitudinally forward, into the pipe, optionally wherein the driving and/or gripping force applied is estimated for each point in a pipe dependent on a layout of the pipe and/or characteristics of the one or more elongate flexible member and the first controller sets an actual driving force to be exerted on the one or more elongate flexible member during a particular push step to exceed the estimated driving and/or gripping force required.

11. A system as claimed in claim 9 or claim 10 wherein the pulling force is applied by applying a lateral, gripping force onto a portion of the draw wire to grip the draw wire and applying a longitudinal pulling force to move the draw wire longitudinally forward, through the pipe.

12. A system as claimed in claim 11 wherein the pulling and/or gripping force applied is estimated for each point in a pipe dependent on a layout of the pipe and/or characteristics of the one or more elongate flexible member and/or characteristics of the draw wire and the first controller sets an actual driving force to be exerted on the draw wire during a particular pull step to exceed the estimated pulling and/or gripping force required.

13. A system as claimed in any one of claims 9 to 12 wherein the first controller communicates with the second controller via a communications link to co-ordinate the sequencing and characteristics of the pushing step and the pulling step.

14. A system as claimed in any one of claims 9 to 13 wherein the first powered device and/or second powered device apply one or more variations to the driving force and/or pulling force by varying the driving force applied to the or each elongate flexible member over the length of the first time period T₁ and/or by varying the pulling force applied to the draw wire over the length of the second time period T₂.

15. A system as claimed in any one of claims 9 to 14 implementing a method, the method comprising laying one or more elongate flexible members through a pipe using a draw wire for which a first end of the draw wire is located at an exit end, outside of the pipe; a second end of the draw wire is located at an entry end, outside of the pipe; and an intermediary portion of the draw wire is located between the entry end and exit end within the pipe, the method further comprising the steps of:
a) attaching a first end of the or each elongate flexible member to the second end of the draw wire;
b) pushing by applying a driving force, a first length of the or each elongate flexible member into the pipe over a first time T₁ in a direction from the entry end towards the exit end;
c) pulling by applying a pulling force, a second length of the draw wire through the pipe over a second time T₂ in the direction from the entry end towards the exit end; and
d) coordinating the first length and first time T₁ with the second length and second time T₂ to drive the or each elongate flexible member through the pipe.
